(19) Europäisches Patentamt
European Patent Office
Office européen des brevets

(11) **EP 2 284 022 B1**

(12) **EUROPEAN PATENT SPECIFICATION**

(45) Date of publication and mention
of the grant of the patent:
**09.05.2012 Bulletin 2012/19**

(51) Int Cl.:
***B60C 1/00*** *(2006.01)*      ***C08L 9/00*** *(2006.01)*
***C08L 21/00*** *(2006.01)*

(21) Application number: **10005180.4**

(22) Date of filing: **18.05.2010**

(54) **Rubber composition for tread and pneumatic tire**

Kautschukzusammensetzung für Lauffläche und Luftreifen

Composition de caoutchouc pour bande et pneu

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **29.07.2009 JP 2009176791
05.10.2009 JP 2009231893**

(43) Date of publication of application:
**16.02.2011 Bulletin 2011/07**

(73) Proprietor: **Sumitomo Rubber Industries, Ltd.
Kobe-shi, Hyogo 651-0072 (JP)**

(72) Inventors:
• **Hattori, Takayuki
Chuo-ku, Kobe-shi, Hyogo 651-0072 (JP)**

• **Matsuura, Ai
Chuo-ku, Kobe-shi, Hyogo 651-0072 (JP)**
• **Wada, Takao
Chuo-ku, Kobe-shi, Hyogo 651-0072 (JP)**
• **Ito, Hiroshi
Chuo-ku, Kobe-shi, Hyogo 651-0072 (JP)**
• **Okamoto, Jun
Chuo-ku, Kobe-shi, Hyogo 651-0072 (JP)**

(74) Representative: **Manitz, Finsterwald & Partner
GbR
Postfach 31 02 20
80102 München (DE)**

(56) References cited:
**EP-A1- 0 704 481      EP-A1- 1 577 341
EP-A1- 2 014 710      US-A- 5 118 546
US-A- 5 637 645**

## Description

TECHNICAL FIELD

The present invention relates to a rubber composition for a tread and a pneumatic tire using the same.

BACKGROUND ART

Rubber compositions for a tire tread containing a natural rubber and the like as main components have been proposed recently in view of issues such as depletion of oil resources, reduction in rolling resistance, and environmental concerns (see, for example, Patent Document 1). However, tread rubbers containing a natural rubber as a main component achieve an inferior running performance (braking performance) on a wet road surface and a dry road surface compared to normally used tread rubbers containing a styrene-butadiene rubber as a main component. To solve this problem, methods for improving the running performance on a wet road surface by using white fillers such as silica, calcium carbonate, and aluminum hydroxide as fillers have been proposed. According to the methods, however, the running performance on a dry road surface is not sufficient.

Patent Document 2 and Patent Document 3 disclose techniques to improve running the performance on a wet road surface by using a combination of epoxidized natural rubber and silica as a white filler. However, if these compositions are used particularly for high performance tires (very low profile tires) or tires for heavy load vehicles among passenger vehicles, their crack resistance and abrasion resistance (especially abrasion resistance) need to be further improved as compared with conventional SBR-based treads. Regarding the crack resistance needed herein, it has been desired to prevent cracking at the bottom of the tread groove in the direction of the groove, which is generated particularly by ozone or repeated strains.

Patent Document 1: JP-A 2003-64222
Patent Document 2: JP-A 2004-359773
Patent Document 3: JP-A 2007-169317

EP 0 704 481 A1 discloses a rubber composition for a tire tread, which includes a rubber component, which comprises - based on 100 parts by weight of the rubber component - 1.0 to 15 parts by weight of epoxidized natural rubber, 1.0 to 15 parts by weight of a carboxylated nitrile rubber and 98 to 70 parts by weight of a diene rubber selected from a list, which includes among others medium vinyl polybutadiene and cis-polybutadiene.

From US 5,118,546 a rubber composition is known, which includes a rubber component comprising (i) from 60 to 95 phr of a diene rubber selected from medium vinyl polybutadiene, styrene butadiene rubber, isoprene rubber, natural rubber, cis-polybutadiene, styrene-isoprene-butadiene rubber and nitrile butadiene rubber and (ii) from 5 to 40 phr of a mixture comprising from 75 to 25 % by weight of chloroprene rubber and from 25 to 75 % by weight of an epoxidized natural rubber.

US 5,637,645 relates to a rubber composition containing natural rubber and an additional polymer material, wherein the additional polymer material may contain from 5 to 30 % by weight of polybutadiene having a high cis-portion and from 5 to 30 % by weight of an epoxidized natural rubber based on the total composition weight.

EP 2 014 710 A1 discloses a rubber composition for a carcass ply or a band of a pneumatic tire, wherein the rubber component comprises 5 to 70 parts by mass of a liquid rubber and 95 to 30 parts by mass of a solid rubber component containing at least one of natural rubber and a modified natural rubber.

EP 1 577 341 A1 discloses a rubber composition for a tread of a tire comprising 5 to 150 parts by weight of silica and 1 to 10 parts by weight of a metal salt of stearic acid, based on 100 parts by weight of a rubber component containing 5 to 100 % by weight of an epoxidized natural rubber.

SUMMARY OF THE INVENTION

The present invention aims to solve the foregoing problems and to provide a rubber composition for a tread, which is friendly to the global environment and can prepare for the decrease in oil supply in the future because of its high content of non-fossil resources, as well as shows an excellent running performance (braking performance) on a wet road surface and a dry road surface, and has an improved abrasion resistance. The present invention also aims to provide a pneumatic tire in which the rubber composition for a tread is used for the tread.

The present invention relates to a rubber composition for a tread including: a rubber component containing butadiene rubber and 35% by mass or more of epoxidized natural rubber based on 100 % by mass of the rubber component; and a white filler.

Desirably, a mixture of a zinc salt of an aliphatic carboxylic acid and a zinc salt of an aromatic carboxylic acid is included.

Desirably, an alkaline fatty acid metal salt is included.

The cis content of the butadiene rubber is desirably 80 mol % or more.

The alkaline fatty acid metal salt is desirably calcium stearate.

The rubber composition for a tread desirably includes a silica having a nitrogen adsorption surface area of 30 to 500 $m^2$/g as the white filler in an amount of 30 to 150 parts by mass per 100 parts by mass of the rubber component.

The present invention also relates to a pneumatic tire having a tread produced by using the aforementioned rubber composition.

The rubber composition for a tread according to the present invention is produced by blending a white filler in a rubber component containing butadiene rubber and a specific amount or more of epoxidized natural rubber. Therefore, the rubber composition for a tread can show an excellent running performance on a wet road surface and a dry road surface and can also allow the abrasion resistance to improve. Moreover, due to inclusion of the specific amount or more of epoxidized natural rubber and the white filler, the content of non-fossil resources can be increased. Thus, the rubber composition for a tread is environment-friendly and can prepare for the decrease in oil supply in the future. The rubber composition for a tread can be used for a tread of a tire, and is environment-friendly and can prepare for the decrease in oil supply in the future. Moreover, the rubber composition for a tread makes it possible to provide a tire having an excellent running performance on a wet road surface and a dry road surface and an improved abrasion resistance.

If the rubber composition for a tread according to the present invention further includes a mixture of a zinc salt of an aliphatic carboxylic acid and a zinc salt of an aromatic carboxylic acid, both a favorable rolling resistance property and good durability (e.g. crack resistance and abrasion resistance) can be achieved at a high level. Moreover, an excellent wet grip performance and excellent handling stability can be achieved. Accordingly, it is possible to provide a pneumatic tire capable of exerting all the foregoing performances in a well-balanced manner.

BEST MODE FOR CARRYING OUT THE INVNETION

The rubber composition for a tread according to the present invention includes a rubber component containing butadiene rubber (BR) and a specific amount or more of epoxidized natural rubber (ENR), and a white filler.

As ENR is used in the present invention, the rubber composition can achieve a good wet grip performance while making consideration for depletion of oil resources, reduction in rolling resistance, and environmental concerns. The ENR is not particularly limited, and commercially available epoxidized natural rubbers may be used, or it may be prepared by epoxidizing natural rubber (NR). Methods for epoxidizing natural rubber are not particularly limited, and examples thereof include the chlorohydrin process, the direct oxidation process, the hydrogen peroxide process, the alkyl hydroperoxide process, and the peracid process (see, for example, JP-B H4-26617, JP-A H2-110182, and GB Patent No. 2113692). Examples of the peracid process include a process in which an organic peracid such as peracetic acid or performic acid is reacted with natural rubber. Adjustment of the amount of an organic peracid and the reaction time enables epoxidized natural rubbers having various degrees of epoxidation.

The natural rubber to be epoxidized is not particularly limited, and examples thereof include natural rubbers commonly used in the tire industry, such as SIR-20, RSS#3, TSR20, deproteinized natural rubber (DPNR), and highly purified natural rubber (HPNR). Examples of the ENR include ENR 25 and ENR 50 (produced by Kumpulan Guthrie Berhad). The ENR may be used either alone or as a combination of two or more kinds.

The epoxidation degree of the ENR is desirably 10 mol % or higher, more desirably 15 mol % or higher, and further desirably 20 mol % or higher. If the epoxidation degree is less than 10 mol %, a sufficient grip performance on a wet road surface (sufficient wet grip performance) tends not to be obtained. The epoxidation degree of the ENR is desirably 60 mol % or lower, more desirably 50 mol % or lower, and further desirably 40 mol % or lower. If the epoxidation degree is higher than 60 mol %, gelation of the polymer may occur, and a sufficient abrasion resistance tends not to be achieved. Further, ozone resistance and reversion resistance tend to be deteriorated. The epoxidation degree refers to the proportion of the number of epoxidized carbon-carbon double bonds to the total number of carbon-carbon double bonds in the natural rubber before epoxidation. The epoxidation degree can be determined by, for example, a titration analysis or nuclear magnetic resonance (NMR) analysis.

The amount of the ENR in 100% by mass of the rubber component is 35% by mass or more, desirably 45% by mass or more, and more desirably 55% by mass or more. If the amount of the ENR is less than 35% by mass, a sufficient grip performance on a wet road surface tends not to be obtained. The amount of the ENR in 100% by mass of the rubber component is desirably 95% by mass or less, more desirably 85% by mass or less, and further desirably 75% by mass or less. If the amount of the ENR exceeds 95% by mass, the relative amount of BR becomes too small, and thus sufficient abrasion resistance and crack resistance tend not to be obtained.

As BR is used in the present invention, good abrasion resistance and crack resistance can be attained. At the same time, the rolling resistance property can be further improved. Regarding the abrasion resistance and crack resistance, better performances are exerted, particularly when the rubber composition is used for high performance tires (very low profile tires) and tires for heavy load vehicles among passenger vehicles.

The BR is not particularly limited, and examples thereof include: BRs with a high cis-content such as BR1220 (produced by ZEON Corporation), BR130B and BR150B (each produced by UBE INDUSTRIES, LTD.); syndiotactic polybutadiene crystal-containing BRs such as VCR412 and VCR617 (each produced by UBE INDUSTRIES, LTD.); modified BRs including S-modified BRs obtained by modifying BRs with an alkoxy-containing silicon compound described in, for example, JP-A 2009-161778 and tin-modified BRs obtained by modifying BRs with a tin compound such as BR1250H (produced by ZEON Corporation); and biomass-derived BRs as synthesized from materials derived from biomass. BRs with a high cis-content and modified BRs are especially desirable as these BRs have good abrasion resistance.

The BR to be used is desirably a biomass-derived BR in consideration of reducing the environmental burdens. Butadiene rubbers of this kind can be produced, for example, by synthesis of butadienes as raw materials, which are obtained by bringing a catalyst into contact with a bioethanol. Although a butadiene rubber synthesized from biomass-derived materials may be blended as a part of the BR, the BR in the rubber composition particularly desirably contains 100% by mass of a biomass-derived butadiene rubber. The biomass-derived materials as used herein refer to "renewable organic resources of biologic origin excluding fossil resources". The derivation of biomass can be determined by a method (ASTM-D6866) of identifying the amount of C14.

As the BR, BRs with a cis content of 80 mol % or more are desirably used. Use of such BRs makes it possible to provide better abrasion resistance. The cis content is more desirably 85 mol % or more, further desirably 90 mol % or more, and most desirably 95 mol % or more.

Moreover, the 5% toluene solution viscosity at 25°C of the BR is desirably 80 cps or more. This makes it possible to increase the effects of improving processability and abrasion resistance. The toluene solution viscosity is desirably 200 cps or less. In the case of more than 200 cps, such a BR has a too high viscosity and tends to cause reduction in processability and not to be easily mixed with other rubbers. The lower limit of the toluene solution viscosity is more desirably 110 cps, and the upper limit of the toluene solution viscosity is more desirably 150 cps.

BRs with a molecular weight distribution (Mw/Mn) of 3.0 or less may be used as they can improve abrasion resistance. Also, BRs with Mw/Mn of 3. 0 to 3. 4 may be used as they can improve both processability and abrasion resistance.

The amount of the BR in 100% by mass of the rubber component is desirably 5% by mass or more, more desirably 10% by mass or more, and further desirably 15% by mass or more. In the case of less than 5% by mass, sufficient abrasion resistance and crack resistance tend not to be obtained. The amount of the BR in 100% by mass of the rubber component is desirably 60% by mass or less, more desirably 50% by mass or less, and further desirably 40% by mass or less. In the case of more than 60% by mass, the relative amount of the ENR becomes small, and thus a sufficient grip performance on a wet road surface (sufficient wet grip performance) tends not to be obtained.

The total amount of the BR and the ENR in 100% by mass of the rubber component is desirably 80% by mass or more, more desirably 90% by mass or more, and further desirably 100% by mass. In the case of less than 80% by mass, a sufficient abrasion resistance and a sufficient grip performance on a wet road surface tend not to be achieved.

Examples of usable rubbers other than BR and ENR as a rubber component include natural rubber (NR), isoprene rubber (IR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Each of the rubbers as a rubber component may be used either alone or as a combination of two or more kinds.

The rubber composition of the present invention contains a white filler. The white filler refers to a filler that is white and comprises an inorganic substance. More specifically, for example, silica, calcium carbonate, mica such as sericite, aluminum hydroxide, magnesium oxide, magnesium hydroxide, clay, talc, alumina, titanium oxide, and the like may be used as the white filler. Silica is particularly desirably used in view of the reinforcing effect, the effect of reducing rolling resistance, and the effect of improving grip performance.

The silica is not particularly limited, and examples thereof include dry silica (silicic anhydride) and wet silica (hydrous silicic acid). Wet silica is desirable because it contains a larger amount of silanol groups. The silica may be used either alone or as a combination of two or more kinds.

The nitrogen adsorption surface area ($N_2SA$) of the silica is desirably 30 $m^2/g$ or more, more desirably 40 $m^2/g$ or more, further desirably 50 $m^2/g$ or more, and particularly desirably 80 $m^2/g$ or more. In the case of less than 30 $m^2/g$, the reinforcing effect is insufficient, and thus the abrasion resistance, mechanical strength, tensile strength, elongation at break, and breaking energy tend to be deteriorated. The $N_2SA$ of the silica is desirably 500 $m^2/g$ or less, more desirably 450 $m^2/g$ or less, further desirably 400 $m^2/g$ or less, particularly desirably 300 $m^2/g$ or less, most desirably 200 $m^2/g$ or less, still most desirably 180 $m^2/g$ or less, and further most desirably 150 $m^2/g$ or less. In the case of more than 500 $m^2/g$, the processability tends to be deteriorated. Moreover, deterioration of the dispersibility, increase in the heat build-up of the rubber composition, and deterioration of the rolling resistance property tend to occur.

The nitrogen adsorption surface area of the silica is determined by the BET method in accordance with ASTM D4820-93.

The amount of the white filler (silica) is desirably 30 parts by mass or more, more desirably 35 parts by mass or more, further desirably 40 parts by mass or more, and particularly desirably 45 parts by mass or more per 100 parts by mass of the rubber component. In the case of less than 30 parts by mass, the breaking strength after vulcanization tends to be low, and a sufficient abrasion resistance tends not to be achieved. The amount of the white filler is desirably 150 parts by mass or less, more desirably 120 parts by mass or less, and further desirably 100 parts by mass or less per 100 parts by mass of the rubber component. In the case of more than 150 parts by mass, the processability tends to be deteriorated. Moreover, the effect of reducing rolling resistance tends not to be sufficiently obtained.

In the present invention, carbon black may be blended as a filler other than the white filler. However, from the viewpoints of reduction in rolling resistance and increase in the content of non-fossil resources, the relative proportion of the white filler is desirably high.

If silica is used as the white filler in the present invention, a silane coupling agent is desirably used together with the silica.

As the silane coupling agent, conventionally known silane coupling agents may be used, and examples thereof include: sulfide-type silane coupling agents such as bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropylmethacrylatemonosulfide, and 3-trimethoxysilylpropylmethacrylate monosulfide; mercapto-type silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl-type silane coupling agents such as vinyltriethoxysilane and vinyltrimethoxysilane; amino-type silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy-type silane coupling agents such as $\gamma$-glycidoxypropyltriethoxysilane, $\gamma$-glycidoxypropyltrimethoxysilane, $\gamma$-glycidoxypropylmethyldiethoxysilane, and $\gamma$-glycidoxypropylmethyldimethoxysilane; nitro-type silane coupling agents such as 3-nitropropyltrimethoxysilane, and 3-nitropropyltriethoxysilane; and chloro-type silane coupling agents such as 3-chloropropyltrimethoxysilane, 3-chloropropyltriethoxysilane, 2-chloroethyltrimethoxysilane, and 2-chloroethyltrimethoxysilane. The silane coupling agent may be used either alone or as a combination of two or more kinds. Bis(3-triethoxysilylpropyl)tetrasulfide and bis(3-triethoxysilylpropyl)disulfide are desirable among the above examples in view of the reinforcing effect of the silane coupling agent and the processability.

The amount of the silane coupling agent per 100 parts by mass of the silica is desirably 1 part by mass or more, more desirably 3 parts by mass or more, further desirably 5 parts by mass or more, and particularly desirably 7 parts by mass or more. If the amount is less than 1 part by mass, sufficient breaking properties and abrasion resistance tend not to be obtained. Also, the amount of the silane coupling agent per 100 parts by mass of the silica is desirably 20 parts by mass or less, more desirably 15 parts by mass or less, and further desirably 10 parts by mass or less. If the amount exceeds 20 parts by mass, a performance improvement (improvement of the breaking properties, reduction in rolling resistance, etc.) commensurate with the blending amount tends not to be made, resulting in a cost increase.

The rubber composition of the present invention desirably contains a mixture of a zinc salt of an aliphatic carboxylic acid and a zinc salt of an aromatic carboxylic acid. If epoxidized natural rubber, natural rubber, butadiene rubber or the like is sulfur-vulcanized, reversion may occur. The phenomenon of reversion includes deterioration of the rubber and degradation of the crosslinked structure. Results of studies conducted by the present inventors have revealed that the abrasion resistance and the rolling resistance property are deteriorated in the phenomenon. Also, rigidity may be decreased, leading to poor handling stability. Moreover, if vulcanization is performed at higher temperatures so as to increase productivity of tires, the foregoing phenomenon may become more significant.

As conventionally known methods to improve the heat resistance of vulcanizable rubber compositions to be used for rubber products such as tires by inhibiting reversion of the rubber compositions, techniques such as a method of increasing the amount of a vulcanization accelerator relative to the amount of sulfur as a vulcanizing agent and a method of blending a thiuram vulcanization accelerator as a vulcanization accelerator have been known. On the other hand, as crosslinking agents capable of forming a long-chain crosslinked structure represented by -$(CH_2)_6$-S- or the like, PERKALINK 900 and Duralink HTS (both produced by Flexsys) and Vulcuren KA9188 (produced by Bayer AG), and the like have been known. It is known that, by blending such a crosslinking agent in the rubber composition, reversion of the rubber composition can be inhibited. The foregoing methods have an effect on the inhibition of reversion of NR or IR; however, they problematically have no effect or little effect on the inhibition of reversion of BR.

Blending a mixture of a zinc salt of an aliphatic carboxylic acid and a zinc salt of an aromatic carboxylic acid can inhibit the reversion of both ENR and BR. As a result, a rubber composition for a tread with a low rolling resistance and a good abrasion resistance can be produced. Further, a high rigidity and an excellent handling stability can be achieved. Inhibition of deterioration of these properties is especially significant when vulcanizaiton is performed at high temperatures. The mixture is greatly suitable as an anti-reversion agent having a favorable action on both ENR and BR. On the other hand, although other anti-reversion agents have an effect on the reversion of NR or ENR, they have no effect or little effect on the reversion of BR in many cases.

Reversion can be inhibited by blending the mixture with the specific amount or more of the ENR and the BR. As a result, deterioration of the vulcanized rubbers and degradation of the crosslinked structure can be inhibited, and therefore deterioration of the abrasion resistance, rolling resistance property and handlin1g stability (rigidity) caused by reversion can be prevented. Moreover, these ingredients make it possible to not only provide an excellent wet grip performance but also to improve the crack resistance (especially, prevention of cracking at the bottom of the tread groove in the direction of the groove) and abrasion resistance.

Accordingly, a tire having a tread produced using such a rubber composition has both excellent rolling resistance property (low tan δ) and durability (crack resistance, abrasion resistance and the like), and it is also desirable from the environmental viewpoint. Further, the tire has excellent wet grip performance and handling stability. Moreover, as reversion can be inhibited even if vulcanization is performed at high temperatures for a short period, it is not only possible to increase productivity but also to achieve a favorable processability of unvulcanized rubber composition.

With regard to the zinc salt of an aliphatic carboxylic acid, examples of the aliphatic carboxylic acid include: aliphatic carboxylic acids derived from vegetable oils such as coconut oil, palm kernel oil, camellia oil, olive oil, almond oil, canola oil, peanut oil, rice bran oil, cacao butter, palm oil, soybean oil, cottonseed oil, sesame oil, linseed oil, castor oil and rapeseed oil; aliphatic carboxylic acids derived from animal oils such as beef tallow; and aliphatic carboxylic acids chemically synthesized from petroleum or the like. The vegetable oil-derived aliphatic carboxylic acids are desirable because they are environment-friendly and it is possible to prepare for a future decrease in oil supply and to inhibit reversion sufficiently. The aliphatic carboxylic acids derived from coconut oil, palm kernel oil, or palm oil are more desirable.

The number of carbon atoms of the aliphatic carboxylic acid is desirably four or more, and more desirably six or more. If the number of carbon atoms of the aliphatic carboxylic acid is less than four, the dispersibility tends to be deteriorated. The number of carbon atoms of the aliphatic carboxylic acid is desirably 16 or less, more desirably 14 or less, and further desirably 12 or less. If the number of carbon atoms of the aliphatic carboxylic acid is more than 16, reversion tends not to be sufficiently inhibited.

The aliphatic group in the aliphatic carboxylic acid may be one having a chain structure, such as an alkyl group, or one having a ring structure, such as a cycloalkyl group.

With regard to the zinc salt of an aromatic carboxylic acid, examples of the aromatic carboxylic acid include benzoic acid, phthalic acid, mellitic acid, hemimellitic acid, trimellitic acid, diphenic acid, toluic acid, and naphthoic acid. Benzoic acid, phthalic acid, and naphthoic acid are desirable among the examples as they can sufficiently inhibit reversion.

The content ratio of the zinc salt of an aliphatic carboxylic acid to the zinc salt of an aromatic carboxylic acid in the mixture [molar ratio: (zinc salt of aliphatic carboxylic acid)/(zinc salt of aromatic carboxylic acid), hereinafter referred to as "content ratio"] is desirably 1/20 or more, more desirably 1/15 or more, and further desirably 1/10 or more. If the content ratio is less than 1/20, it may be impossible to be environment-friendly and to prepare for a future decrease in oil supply, and further, the dispersibility and stability of the mixture tend to be deteriorated. The content ratio is desirably 20/1 or less, more desirably 15/1 or less, and further desirably 10/1 or less. If the content ratio is more than 20/1, inhibition of reversion tends to be insufficient.

The zinc content in the mixture is desirably 3% by mass or more, and more desirably 5% by mass or more. If the zinc content in the mixture is less than 3% by mass, inhibition of reversion tends to be insufficient. The zinc content in the mixture is desirably 30% by mass or less, and more desirably 25% by mass or less. If the zinc content in the mixture is more than 30% by mass, the processability tends to be deteriorated and the cost may be unnecessarily increased.

The amount of the mixture per 100 parts by mass of the rubber component is desirably 0.2 parts by mass or more, more desirably 0. 5 parts by mass or more, further desirably 1. 0 part by mass or more, and most desirably 1.4 parts by mass or more. In the case of less than 0.2 parts by mass, a sufficient reversion resistance cannot be achieved and therefore it tends to be difficult to provide an effect of maintaining the durability of tires. The amount of the mixture per 100 parts by mass of the rubber component is desirably 10 parts by mass or less, more desirably 7 parts by mass or less, and further desirably 5 parts by mass or less. In the case of more than 10 parts by mass, blooming tends to occur more frequently and improvement of the effects for the added amount tends to become smaller, resulting in an unnecessary increase in cost.

Desirably, an alkaline fatty acid metal salt is included in the rubber composition of the present invention. Since an acid used for synthesizing the ENR is neutralized by the alkaline fatty acid metal salt, degradation of the ENR due to heat during kneading and vulcanization can be prevented. It is also possible to prevent reversion. Furthermore, blending of the alkaline fatty acid metal salt in the rubber composition of the present invention can further enhance the effect of improving abrasion resistance which is caused by the combined use of the ENR and the BR.

With regard to the alkaline fatty acid metal salt, examples of the metal include sodium, potassium, calcium, barium, magnesium, and zinc. Calcium, zinc and barium are desirable among the examples, and calcium is more desirable, considering that these metals exist abundantly in nature, place a smaller burden on the environment, increase heat resistance, and have a better compatibility with epoxidized natural rubber. Specific examples of the alkaline fatty acid metal salt include: metal stearates such as sodium stearate, magnesium stearate, calcium stearate, and barium stearate; and metal oleates such as sodium oleate, magnesium oleate, calcium oleate, and barium oleate. Calcium stearate and calcium oleate are desirable among the examples because they have excellent aging resistance and heat resistance, have a better compatibility with epoxidized natural rubber, and require a relatively low cost.

The amount of the alkaline fatty acid metal salt per 100 parts by mass of the ENR is desirably 1.0 part by mass or more, more desirably 1.5 parts by mass or more, further desirably 2. 0 parts by mass or more, and particularly desirably 3.0 parts by mass or more. In the case of less than 1.0 part by mass, sufficient effects derived from the addition of the alkaline fatty acid metal salt (sufficient effects especially on heat resistance and reversion resistance) tend to be hardly obtained. The amount of the alkaline fatty acid metal salt per 100 parts by mass of the ENR is desirably 15 parts by mass or less, more desirably 12 parts by mass or less, further desirably 10 parts by mass or less, particularly desirably 9.0 parts by mass or less, and most desirably 8.0 parts by mass or less. In the case of more than 12 parts by mass, rolling resistance tends to increase. Further, breaking strength and abrasion resistance tend to be deteriorated.

The rubber composition according to the present invention may contain fatty acids such as stearic acid, palmitic acid, myristic acid, lauric acid, caprylic acid, oleic acid, and linoleic acid, and among these, stearic acid is desirable because of its low cost. As the stearic acid, conventionally known stearic acids such as Tsubaki produced by NOF Corporation may be used.

In the rubber composition of the present invention, the total amount of the alkaline fatty acid metal salt, the mixture of a zinc salt of an aliphatic carboxylic acid and a zinc salt of an aromatic carboxylic acid, and the fatty acid per 100 parts by mass of the rubber component is desirably 2.5 parts by mass or more, more desirably 4 parts by mass or more, and further desirably 6 parts by mass or more. In the case of less than 2.5 parts by mass, degradation of the ENR and reversion tend not to be prevented sufficiently, and the efficiency of effectively crosslinking the added sulfur tends not to be improved. The total amount per 100 parts by mass of the rubber component is desirably 20 parts by mass or less, more desirably 17 parts by mass or less, and further desirably 12 parts by mass or less. In the case of more than 20 parts by mass, abrasion resistance and mechanical strength tend to be decreased.

Other than the foregoing ingredients, the rubber composition of the present invention may optionally contain, as appropriate, compounding ingredients conventionally used in the rubber industry, for example, inorganic or organic fillers, softening agents such as oils, zinc oxide, various age resistors, antiozonants, waxes, vulcanizing agents such as sulfur and sulfur compounds, vulcanization accelerators, and the like.

As the zinc oxide, conventionally known zinc oxides such as Zinc White #1 produced by Mitsui Mining & Smelting Co. , Ltd. may be used.

As the age resistor, conventionally known age resistors such as Antigen 6C (N-(1,3-dimethylbutyl)-N'-phenyl-p-phenylenediamine) produced by Sumitomo Chemical Co., Ltd. may be used.

As the sulfur, conventionally known sulfurs such as sulfur powder produced by Tsurumi Chemical Industry Co., Ltd. may be used.

As the vulcanization accelerator, conventionally known vulcanization accelerators may be used, and for example, it is possible to use a product that contains at least one selected from the group consisting of sulfenamide vulcanization accelerators, thiazole vulcanization accelerators, thiuram vulcanization accelerators, thiourea vulcanization accelerators, guanidine vulcanization accelerators, dithiocarbamine vulcanizaiton accelerators, aldehyde-amine or aldehyde-ammonia vulcanization accelerators, imidazoline vulcanization accelerators, and xanthate vulcanization accelerators. Each of these vulcanization accelerators may be used either alone or as a combination of two or more kinds.

The rubber composition of the present invention can be produced according to a usual method. That is, for example, the aforementioned ingredients are kneaded with a Banbury mixer, a kneader, or an open roll mill and then vulcanized to produce the rubber composition.

The rubber composition of the present invention can be suitably used for a tread of a pneumatic tire.

The pneumatic tire of the present invention can be produced by a usual method using the rubber composition. That is, the unvulcanized rubber composition is extruded and processed into a tread shape, molded in a usual manner on a tire building machine, and then assembled with other tire components to obtain an unvulcanized tire. Then, the unvulcanized tire is subjected to heating and pressing in a vulcanizer to obtain a tire.

Usage of pneumatic tires having a tread produced by using the rubber composition of the present invention is not particularly limited. The tires can be suitably used especially as high performance tires (very low profile tires) and tires for heavy load vehicles among passenger vehicles.

EXAMPLES

The present invention will be specifically described based on Examples, but is not intended to be limited only to these Examples.

The respective chemical agents used in Examples 1 to 5 and Comparative Examples 1 to 5 are listed below.

ENR(1): Epoxidized natural rubber (epoxidation degree: 25 mol %), produced by Kumpulan Guthrie Berhad (Malaysia)

ENR(2): Epoxidized natural rubber (epoxidation degree: 50 mol %), produced by Kumpulan Guthrie Berhad (Malaysia)

NR: TSR

BR(1): BR150L (cis content: 98 mol %), produced by Ube Industries, Ltd.

BR(2): BR130B (cis content: 95 mol %), produced by Ube Industries, Ltd.

Oil: Refined soybean oil (vegetable oil, iodine value: 131, fatty acid component having at least 18 carbon atoms: 84.9%), produced by Nisshin Oillio, Ltd.

Silica: ZEOSIL 115GR ($N_2SA$: 110 $m^2/g$), produced by Rhodia

Silane coupling agent: Si266 (bis(3-triethoxysilylpropyl)disulfide), produced by Degussa AG

Alkaline fatty acid metal salt: Calcium stearate, produced by NOF Corporation

Zinc oxide: Zinc White #1, produced by Mitsui Mining & Smelting Co., Ltd.

Stearic acid: Tsubaki, produced by NOF Corporation

Age resistor: Antigen 6C (N-(1,3-dimethylbutyl)-N'-phenyl-p-phenylenediamine), produced by Sumitomo Chemical Co., Ltd.

Sulfur: Sulfur powder, produced by Tsurumi Chemical Industry Co., Ltd.

Vulcanization accelerator: Nocceler NS (N-tert-butyl-2-benzothiazolyl sulfenamide), produced by Ouchi Shinko Chemical Industrial Co., Ltd.

Examples 1 to 5, and Comparative Examples 1 to 5

According to the respective formulations shown in Table 1, the ingredients other than the sulfur and the vulcanization accelerator were mixed and kneaded for 5 minutes at a temperature of 130°C using a 1.7 L-Banbury mixer to provide a kneaded mass. To the resulting kneaded mass were added the sulfur and the vulcanization accelerator, and they were kneaded with an open roll mill for 3 minutes at a temperature of 60°C, so that an unvulcanized rubber composition was produced. The resulting unvulcanized rubber composition was molded into a tread shape, assembled with other tire components to form a tire and then vulcanized for 30 minutes at a temperature of 150°C. As a result, a test tire (tire size: 195/65R15) was produced.

The following evaluations were made on the obtained test tires. Table 1 shows the test results.

(Braking Test)

The obtained test tires were mounted on a domestic FR car with 2000 cc displacement. The brake stopping distance after stepping on the brake at 100 km/h was measured on a dry asphalt road surface or a wet asphalt road surface. A friction coefficient $\mu$ was determined based on the measured value. The friction coefficient $\mu$ was expressed as an index relative to the friction coefficient $\mu$ of Comparative Example 1 regarded as 100. A larger index indicates a better running performance (braking performance) on a wet road surface or a dry road surface.

(Abrasion Test)

The obtained test tires were mounted on a domestic FR car with 2000 cc displacement. The amount of decrease in the depth of the tire grooves after the car had run 8000 km in an urban area was measured, and then the running distance that decreased the depth of the tire grooves by 1 mm was calculated. Further, based on the following equation, the running distance that decreased the depth of the tire grooves by 1mm was expressed as an abrasion resistance index relative to the abrasion resistance index of Comparative Example 1 regarded as 100. A larger abrasion resistance index indicates a better abrasion resistance.

(Abrasion resistance index) = (Running distance at which the groove depth of the tire of each formulation is decreased by 1 mm) / (Running distance at which the groove depth of the tire of Comparative Example 1 is decreased by 1 mm) × 100

[Table 1]

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| ENR(1) | 70 | 60 | 50 | 70 | - | 100 | 20 | - | - | - |
| ENR(2) | - | - | - | - | 60 | - | - | 100 | - | - |
| NR | - | - | - | - | - | - | 50 | - | 70 | 100 |
| BR(1) | 30 | 40 | 50 | - | 40 | - | 30 | - | 30 | - |
| BR(2) | - | - | - | 30 | - | - | - | - | - | - |
| Silica | 75 | 75 | 75 | 75 | 75 | 75 | 75 | 75 | 75 | 75 |
| Silane coupling agent | 6 | 6 | 6 | 6 | 6 | 6 | 6 | 6 | 6 | 6 |
| Oil | 10 | 10 | 10 | 10 | 15 | 10 | 10 | 15 | 5 | 5 |
| Alkaline fatty acid metal salt | 5 | 5 | 5 | 5 | 5 | 5 | 5 | 5 | 5 | 5 |
| Zinc oxide | 3 | 3 | 3 | 3 | 3 | 3 | 3 | 3 | 3 | 3 |
| Stearic acid | 2 | 2 | 2 | 2 | 2 | 2 | 2 | 2 | 2 | 2 |
| Age resistor | 1.5 | 1.5 | 1.5 | 1.5 | 1.5 | 1.5 | 1.5 | 1.5 | 1.5 | 1.5 |
| Sulfur | 1.8 | 1.8 | 1.8 | 1.8 | 1.8 | 1.8 | 1.8 | 1.8 | 1.8 | 1.8 |
| Vulcanization accelerator | 2 | 2 | 2 | 2 | 2 | 2 | 2 | 2 | 2 | 2 |
| Running performance (Dry road surface) | 100 | 98 | 96 | 99 | 105 | 100 | 85 | 110 | 73 | 76 |
| Running performance (Wet road surface) | 99 | 97 | 97 | 99 | 113 | 100 | 82 | 115 | 62 | 65 |

(continued)

|  | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Abrasion resistance | 118 | 125 | 140 | 120 | 106 | 100 | 110 | 84 | 130 | 121 |

As shown in Table 1, the tires in Examples in which silica as a white filler was blended in the rubber component containing BR and a specific amount or more of ENR had an improved abrasion resistance while maintaining the running performance (braking performance) on a wet road surface and a dry road surface, as compared with the tires in Comparative Examples 1 and 3 which did not contain BR. It is thus proved that the tires prepared in Examples have an excellent running performance on a wet road surface and a dry road surface and can also have an improved abrasion resistance. On the other hand, as shown by Comparative Examples 4 and 5 in which NR was used in place of ENR, and further BR was used or not used for comparison of the difference between the presence and absence of the BR, the effect of improving abrasion resistance due to blending of BR was smaller and the reduction in running performance on a wet road surface and a dry road surface was larger when NR was used than when ENR was used. Moreover, in Comparative Example 2 in which ENR is contained in an amount less than the specific amount, although the abrasion resistance-improving effect derived from blending of BR was observed, the effect was not sufficient and the running performance on a wet road surface and a dry road surface was inferior as compared to Examples.

The respective chemical agents used in Examples 6 to 17 and Comparative Examples 6 to 10 are listed below.

BR(3): BR150B (cis content: 97 mol %, $ML_{1+4}$ (100°C): 40, 5% toluene solution viscosity at 25°C: 48 cps, Mw/Mn: 3.3), produced by Ube Industries, Ltd.

BR(4): BR360L (cis content: 98 mol %, $ML_{1+4}$ (100°C): 51, 5% toluene solution viscosity at 25°C: 124 cps, Mw/Mn: 2.4), produced by Ube Industries, Ltd.

BR(5): BR trial product A (cis content: 98 mol %, $ML_{1+4}$ (100°C): 51, 5% toluene solution viscosity at 25°C: 122 cps, Mw/Mn: 3.3), produced by Ube Industries, Ltd.

ENR(3) (ENR-25) : (epoxidation degree: 25 mol %, Tg: -47°C), produced by MRB (Malaysia)

ENR(4) (ENR-37.5): trial product (epoxidation degree: 37.5 mol %, Tg: -35°C), produced by MRB (Malaysia)

NR: RSS #3

Silica: Ultrasil VN2 ($N_2SA$: 125 $m^2$/g), produced by Degussa AG

Silane coupling agent: Si69 (bis(3-triethoxysilylpropyl)tetrasulfide), produced by Degussa AG

Oil: Refined soybean oil (iodine value: 131, fatty acid component having at least 18 carbon atoms: 84.9%), produced by Nisshin Oillio, Ltd.

Alkaline fatty acid metal salt: Calcium stearate, produced by NOF Corporation

Stearic acid: Kiri, produced by NOF Corporation

Anti-reversion agent 1 (mixture of zinc salt of aliphatic carboxylic acid and zinc salt of aromatic carboxylic acid): Activator 73A ((i) zinc salt of aliphatic carboxylic acid: zinc salt of coconut oil-derived fatty acid (number of carbon atoms: 8 to 12), (ii) zinc salt of aromatic carboxylic acid: zinc benzoate, molar ratio: 1/1, zinc content: 17% by mass), produced by Struktol

Anti-reversion agent 2: PERKALINK 900 (1,3-bis(citraconimidomethyl)benzene), produced by Flexsys

Zinc oxide: Zinc oxide #2, produced by Mitsui Mining & Smelting Co., Ltd.

Age resistor: NOCRAC 6C (N-(1,3-dimethylbutyl)-N'-phenyl-p-phenylenediamine), produced by Ouchi Shinko Chemical Industrial Co., Ltd.

Wax: SUNNOC Wax, produced by Ouchi Shinko Chemical Industrial Co., Ltd.

Sulfur: Sulfur powder, produced by Tsurumi Chemical Industry Co., Ltd.

Vulcanization accelerator TBBS: Nocceler NS (N-tert-butyl-2-benzothiazolyl sulfenamide), produced by Ouchi Shinko Chemical Industrial Co., Ltd.

Examples 6 to 17 and Comparative Examples 6 to 10

According to the respective formulations shown in Table 2, the formulation ingredients other than the sulfur and the vulcanization accelerator were mixed and kneaded for 5 minutes using a 1.7 L-Banbury mixer so as to raise the outlet temperature to 150°C, thereby giving a kneaded mass. To the resulting kneaded mass were added the sulfur and the vulcanization accelerator, and then kneaded with an open two-roll mill for 3 minutes at a temperature of 80°C, so that an unvulcanized rubber composition was produced.

The resulting unvulcanized rubber composition was press-vulcanized for 15 minutes at a temperature of 170°C to provide a vulcanized rubber sheet.

In addition, the resulting unvulcanized rubber composition was molded into a tread shape, assembled with other tire components and then vulcanized for 15 minutes at a temperature of 170°C to produce a test tire.

The following evaluations were made on the obtained unvulcanized rubber compositions, vulcanized rubber sheets, and test tires. Table 2 shows the test results.

(1) Wet grip performance

Wet grip performance was evaluated based on the braking performance obtained by the anti-lock braking system (ABS) evaluation test. More specifically, the test tires were mounted on a 1800 cc-class passenger car equipped with ABS, and the car was driven on an asphalt road surface (condition of the road surface: wet, skid number: approximately 50). Then, the brake was stepped on when the speed was 100 km/h, and the deceleration until the car stopped was calculated. The deceleration used herein refers to a distance required for the car to stop after the brake is stepped on. Further, based on the following equation, the deceleration for the tire of each formulation was expressed as a wet grip performance index relative to the wet grip performance index of Comparative Example 6 regarded as 100. A larger wet grip performance index indicates a better braking performance and an excellent wet grip performance.

```
(Wet grip performance index) = (Deceleration of Comparative
Example 6) / (Deceleration of each formulation) × 100
```

(2) Dry grip performance

The test tires were mounted on a passenger car, and the car was driven on a test course having a dry asphalt road surface. Properties of the tires including handling response, rigidity, and grip were evaluated based on sensory evaluations of the driver. The results were expressed as indexes relative to the result of Comparative Example 6 regarded as 100. A larger value indicates a better performance with excellent dry grip performance and handling stability.

(3) Rolling resistance test

A vulcanized rubber sheet having a size of 2 mm x 130 mm x 130 mm was prepared in a similar manner as above, and a measurement sample was cut out from the sheet. Tan $\delta$ of each sample was measured using a viscoelastic spectrometer VES (produced by Iwamoto Seisakusho Co., Ltd.) under conditions of: a temperature of 50°C; an initial strain of 10%; a dynamic strain of 2%; and a frequency of 10 Hz. Based on the equation below, the rolling resistance property of each formulation was expressed as a rolling resistance index relative to the rolling resistance index of Comparative Example 6 regarded as 100. A larger index indicates a lower rolling resistance and thus an excellent property.

```
(Rolling resistance index) = ((Tan δ of Comparative Example
6) / (Tan δ of each formulation)) × 100
```

(4) Abrasion resistance test (Abrasion test)

The produced test tires were mounted on a passenger car, and the amount of decrease in the depth of the tire grooves after the car had run 8000 km in an urban area was measured. The running distance that decreased the depth of the tire grooves by 1 mm was calculated. Further, based on the following equation, the decrease in the depth of the tire grooves for each formulation was expressed as an abrasion resistance index relative to the abrasion resistance index of Comparative Example 6 regarded as 100. A larger abrasion resistance index indicates a better abrasion resistance.

```
(Abrasion resistance index) = (Running distance at which the
groove depth of the tire of each formulation is decreased by
1 mm) / (Running distance at which the groove depth of the tire
of Comparative Example 6 is decreased by 1 mm) × 100
```

(5) Breaking energy index

According to JIS K 6251 "Rubber, vulcanized or thermoplastic - Determination of tensile stress - strain properties", the tensile strength and the elongation at break of each vulcanized rubber sheet were measured. Further, the breaking energy was calculated from the formula: (tensile strength) x (elongation at break) /2, and then the breaking energy index was calculated according to the following equation.

$$\text{(Breaking energy index)} = \text{(Breaking energy of each formulation)} / \text{(Breaking energy of Comparative Example 6)} \times 100$$

(6) Ozone resistance test

According to JIS K 6259 "Rubber, vulcanized or thermoplastics - Determination of ozone resistance", a dynamic ozone-degradation test was carried out on each of the vulcanized rubber sheets for 48 hours under conditions of: a frequency of reciprocation of $0.5 \pm 0.025$ Hz, an ozone concentration of $50 \pm 5$ pphm, a test temperature of 40°C, and a tensile strain of $20 \pm 2\%$. By observing cracks generated in the vulcanized rubber sheets, the ozone resistance was evaluated. In the evaluation, the number and the size of cracks were shown in accordance with the method described in the JIS. Regarding the alphabet symbols (A, B, and C), symbol A indicates that the number of cracks was small, and symbol C indicates that the number of cracks was large. Regarding the numbers shown with the alphabet symbols, a larger number indicates a larger size of crack, and "none" indicates no cracks generated. Better ozone resistance leads to better crack resistance of the tires.

(7) Reversion resistance

A vulcanization curve of each unvulcanized rubber composition at a temperature of 170°C was determined using a vulcanization testing machine (for example, Curelastometer produced by JSR Trading Co., Ltd.). A maximum torque (MH) value, a minimum torque (ML) value, a torque value M20 obtained 20 minutes after the start of vulcanization were measured so that the reversion of each formulation was calculated according to the following equation for evaluation. A smaller reversion ratio indicates better inhibition of reversion, and thus an excellent property.

$$\text{(Reversion ratio (\%))} = \text{(MH-M20)} / \text{(MH-ML)} \times 100$$

[Table 2]

| | Examples | | | | | | | | | | | | Comparative Examples | | | | |
|---|---|---|---|---|---|---|---|---|---|---|---|---|---|---|---|---|---|
| | 6 | 7 | 8 | 9 | 10 | 11 | 12 | 13 | 14 | 15 | 16 | 17 | 6 | 7 | 8 | 9 | 10 |
| **Formulation (part by mass)** | | | | | | | | | | | | | | | | | |
| BR(3) | 30 | 20 | 40 | 50 | - | - | - | - | - | - | - | 30 | - | - | - | - | 30 |
| BR(4) | - | - | - | - | 30 | 30 | 30 | 30 | 30 | - | - | - | - | - | - | - | - |
| BR(5) | - | - | - | - | - | - | - | - | - | 30 | 30 | - | - | - | - | - | - |
| ENR(3) | 70 | 80 | 60 | 50 | 70 | 70 | 70 | 70 | 70 | 70 | - | 70 | 100 | 100 | 70 | 70 | - |
| ENR(4) | - | - | - | - | - | - | - | - | - | - | 70 | - | - | - | - | - | - |
| NR | - | - | - | - | - | - | - | - | - | - | - | - | - | - | 30 | 30 | 70 |
| Silica | 75 | 75 | 75 | 75 | 75 | 75 | 75 | 75 | 75 | 75 | 75 | 75 | 75 | 75 | 75 | 75 | 75 |
| Silane coupling agent | 8.0 | 6.0 | 8.0 | 6.0 | 6.0 | 8.0 | 6.0 | 6.0 | 6.0 | 6.0 | 6.0 | 6.0 | 6.0 | 6.0 | 6.0 | 6.0 | 6.0 |
| Oil | 10 | 10 | 10 | 10 | 10 | 10 | 10 | 10 | 10 | 10 | 10 | 10 | 10 | 10 | 10 | 10 | 10 |
| Alkaline fatty acid metal salt | 4 | 4 | 4 | 4 | 4 | 4 | - | 10 | 4 | 4 | 6 | - | - | - | - | - | 4 |
| Stearic acid | 2 | 2 | 2 | 2 | 2 | 2 | 2 | 2 | 2 | 2 | 2 | 2 | 2 | 2 | 2 | 2 | 2 |
| Anti-reversion agent 1 | 3 | 3 | 3 | 3 | 0.7 | 5 | 3 | 3 | 3 | 3 | 3 | - | - | - | 3 | - | 3 |
| Anti-reversion agent 2 | - | - | - | - | - | - | - | - | - | - | - | - | - | - | - | - | - |
| Zinc oxide | 3 | 3 | 3 | 3 | 3 | 3 | 3 | 3 | 3 | 3 | 3 | 3 | 3 | 3 | 3 | 3 | 3 |
| Age resistor | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Sulfur | 2.1 | 2.1 | 2.1 | 2.1 | 2.1 | 2.1 | 2.1 | 2.1 | 2.1 | 2.1 | 2.1 | 2.1 | 2.1 | 2.1 | 2.1 | 2.1 | 2.1 |
| Vulcanization Accelerator TBBS | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| **Test results** | | | | | | | | | | | | | | | | | |
| Wet grip performance index (i) | 99 | 99 | 98 | 98 | 99 | 98 | 99 | 97 | 98 | 99 | 115 | 98 | 100 | 95 | 99 | 97 | 55 |
| Dry grip performance index (ii) | 103 | 104 | 100 | 99 | 101 | 100 | 100 | 98 | 104 | 104 | 105 | 100 | 100 | 100 | 101 | 100 | 100 |
| Rolling resistance index (iii) | 112 | 108 | 113 | 117 | 109 | 112 | 106 | 108 | 114 | 113 | 98 | 103 | 100 | 106 | 107 | 103 | 120 |
| Abrasion resistance index (iv) | 137 | 123 | 146 | 152 | 118 | 117 | 113 | 114 | 142 | 144 | 118 | 108 | 100 | 103 | 104 | 101 | 130 |
| Breaking energy index (v) | 117 | 109 | 109 | 90 | 109 | 98 | 102 | 95 | 121 | 123 | 106 | 97 | 100 | 103 | 99 | 99 | 97 |
| Ozone resistance | B-2 | C-2 | A-2 | None | B-2 | B-1 | B-2 | B-1 | B-2 | B-2 | C-2 | B-2 | C-3 | C-3 | C-3 | C-3 | B-2 |
| Reversion ratio | 1 | 0.5 | 1 | 1 | 8 | 0.2 | 3 | 0.2 | 1 | 1 | 2 | 14 | 35 | 22 | 3 | 4 | 4 |
| Alkaline fatty acid metal salt + Anti-reversion agent 1 + Stearic acid | 9.0 | 9.0 | 9.0 | 9.0 | 6.7 | 11.0 | 5.0 | 15.0 | 9.0 | 9.0 | 11.0 | 2.0 | 2.0 | 2.0 | 5.0 | 2.0 | 9.0 |
| Average performance of (i) to (iv) | 113 | 109 | 114 | 116 | 107 | 107 | 104 | 104 | 115 | 115 | 109 | 102 | 100 | 101 | 102 | 100 | 101 |
| Average performance of (i) to (v) | 114 | 109 | 113 | 111 | 107 | 105 | 104 | 102 | 116 | 117 | 106 | 101 | 100 | 101 | 102 | 100 | 100 |

In Comparative Examples 6 to 9, the ozone resistance was poor, whereas the ozone resistance was improved in all Examples. Notably, a larger amount of BR resulted in better ozone resistance. Also, in Example 16 in which ENR (4) (ENR-37.5) was used, the ozone resistance was slightly improved as compared with those in Comparative Examples 6 to 9. Moreover, in that Example 16, use of the ENR(4) (ENR-37.5) largely improved wet grip performance and largely improved even abrasion resistance as compared with those in Comparative Examples 6 to 9.

In other Examples, the abrasion resistance and crack resistance were good. In especially those Examples in which the blending ratio of BR was high, the abrasion resistance was good. Moreover, the rolling resistance property in Examples was very good or almost equal to that in Comparative Example 6.

Since BR was not blended in Comparative Examples 6 to 9, the ozone resistance and the abrasion resistance were poor. In Example 17, although BR was blended, the abrasion resistance was inferior to those in other Examples due to absence of the mixture of a zinc salt of an aliphatic carboxylic acid and a zinc salt of an aromatic carboxylic acid and the alkaline fatty acid metal salt. In Comparative Example 10, the wet grip performance was very poor because ENR was not blended. Further, as the reversion resistance was inferior to those in Examples 6 to 9 and 11 to 16, the abrasion resistance showed lower improvements in this Comparative Example 10 in spite of no blending of ENR.

On the other hand, good performance was achieved in Examples, and the balance of the properties was good especially in Examples 6 to 11 and 14 to 16 in which the total amount of the mixture of a zinc salt of an aliphatic carboxylic acid and a zinc salt of an aromatic carboxylic acid (part(s) by mass) the alkaline fatty acid metal salt (part(s) by mass) + the stearic acid (part(s) by mass) was 6.7 to 11 parts by mass.

## Claims

1. A rubber composition for a tread, comprising:

   a rubber component containing butadiene rubber and 35% by mass or more of epoxidized natural rubber based on 100 % by mass of the rubber component; and
   a white filler.

2. The rubber composition for a tread according to Claim 1, comprising
   a mixture of a zinc salt of an aliphatic carboxylic acid and a zinc salt of an aromatic carboxylic acid.

3. The rubber composition for a tread according to Claim 1 or 2, comprising
   an alkaline fatty acid metal salt.

4. The rubber composition for a tread according to Claim 1 to 3, wherein
   a cis content of the butadiene rubber is 80 mol % or more.

5. The rubber composition for a tread according to Claim 3, wherein
   the alkaline fatty acid metal salt is calcium stearate.

6. The rubber composition for a tread according to Claim 1 to 5, comprising
   a silica having a nitrogen adsorption surface area of 30 to 500 $m^2/g$ as the white filler in an amount of 30 to 150 parts by mass per 100 parts by mass of the rubber component.

7. A pneumatic tire having a tread produced by using the rubber composition according to Claim 1 to 6.

## Patentansprüche

1. Kautschukzusammensetzung für eine Lauffläche, welche enthält:

   eine Kautschukkomponente, welche Butadienkautschuk und 35 Massen-% oder mehr epoxidierten Naturkautschuk bezogen auf 100 Massen-% der Kautschukkomponente enthält, sowie
   einen weißen Füllstoff.

2. Kautschukzusammensetzung für eine Lauffläche nach Anspruch 1, welche eine Mischung eines Zinksalzes einer aliphatischen Carbonsäure und eines Zinksalzes einer aromatischen Carbonsäure enthält.

3. Kautschukzusammensetzung für eine Lauffläche nach Anspruch 1 oder 2, welche ein alkalisches Fettsäuremetallsalz enthält.

4. Kautschukzusammensetzung für eine Lauffläche nach einem der Ansprüche 1 bis 3, wobei der cis-Gehalt des Butadienkautschuks 80 Mol-% oder mehr beträgt.

5. Kautschukzusammensetzung für eine Lauffläche nach Anspruch 3, wobei das alkalische Fettsäuremetallsalz Calciumstearat ist.

6. Kautschukzusammensetzung für eine Lauffläche nach einem der Ansprüche 1 bis 5, welche ein Silica mit einer durch Stickstoffadsorption gemessenen Oberfläche zwischen 30 und 500 $m^2/g$ als den weißen Füllstoff in einer Menge zwischen 30 und 150 Massenteilen pro 100 Massenteilen der Kautschukkomponente enthält.

7. Luftreifen mit einer Lauffläche, welche unter Verwendung einer Kautschukzusammensetzung nach einem der Ansprüche 1 bis 6 hergestellt worden ist.

**Revendications**

1. Composition de caoutchouc pour bande de roulement comprenant :

   un composant caoutchouc contenant un caoutchouc de butadiène et 35 % en masse ou plus d'un caoutchouc naturel époxydé sur la base de 100 % en masse du composant caoutchouc ; et
   une charge blanche.

2. Composition de caoutchouc pour bande de roulement selon la revendication 1 comprenant un mélange d'un sel de zinc d'un acide carboxylique aliphatique et d'un sel de zinc d'un acide carboxylique aromatique.

3. Composition de caoutchouc pour bande de roulement selon la revendication 1 ou 2 comprenant un sel de métal alcalin et d'acide gras.

4. Composition de caoutchouc pour bande de roulement selon les revendications 1 à 3 où une teneur en cis du caoutchouc de butadiène est 80 mol % ou plus.

5. Composition de caoutchouc pour bande de roulement selon la revendication 3 où le sel de métal alcalin et d'acide gras est le stéarate de calcium.

6. Composition de caoutchouc pour bande de roulement selon les revendications 1 à 5 comprenant une silice ayant une aire d'adsorption d'azote de 30 à 500 $m^2$/g comme charge blanche en une quantité de 30 à 150 parties en masse pour 100 parties en masse du composant caoutchouc.

7. Pneumatique ayant une bande de roulement produite au moyen de la composition de caoutchouc selon les revendications 1 à 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003064222 A
- JP 2004359773 A
- JP 2007169317 A
- EP 0704481 A1
- US 5118546 A
- US 5637645 A

- EP 2014710 A1
- EP 1577341 A1
- JP H426617 B
- JP H2110182 A
- GB 2113692 A
- JP 2009161778 A